# EUROPÄISCHE PATENTSCHRIFT

(11) **EP 0 836 687 B1**
(45) Veröffentlichungstag und Bekanntmachung des Hinweises auf die Patenterteilung: **07.01.1999**
(21) Anmeldenummer: 96918692.3
(22) Anmeldetag: 14.06.1996
(51) Int. Cl.: F16H 61/46, F16H 47/02

(54) **HYDROSTATISCHER ANTRIEB MIT SYNCHRONISIERTEM DIREKTDURCHTRIEB**
HYDROSTATIC DRIVE WITH SYNCHRONISED DIRECT THROUGH-DRIVE
ENTRAINEMENT HYDROSTATIQUE A PRISE DIRECTE SYNCHRONISEE

(30) Priorität: 03.07.1995 DE 19524188
(43) Veröffentlichungstag der Anmeldung: 22.04.1998
(73) Patentinhaber: BRUENINGHAUS HYDROMATIK GMBH, 89275 Elchingen (DE)
(72) Erfinder: SOMMER, Josef, D-89610 Oberdischingen (DE)
(74) Vertreter: Körfer, Thomas, Dipl.-Phys.
(86) Internationale Anmeldenummer: EP9602565
(87) Internationale Veröffentlichungsnummer: WO9702444

(56) Entgegenhaltungen:
- EP-A- 0 417 283
- DE-A- 3 540 218
- DE-A- 4 026 659
- DE-A- 4 402 947
- GB-A- 2 256 506

## Beschreibung

Die Erfindung betrifft einen hydrostatischen Antrieb, insbesondere für Fahrzeuge.

Ein hydrostatisches Getriebe mit Direktdurchtrieb entsprechend dem Oberbegriff des Anspruches 1 ist aus der DE-35 40 218 A1 bekannt. Der bekannte Antrieb umfaßt einen Antriebsmotor, ein hydrostatisches Getriebe mit in einem hydraulischen Kreislauf angeordneter Hydropumpe, die an den Antriebsmotor gekoppelt ist, und einem Hydromotor, der an eine ausgangsseitige Antriebswelle gekoppelt ist. Ferner ist eine Direktdurchtriebswelle vorhanden, die den Antriebsmotor über eine Trennkupplung lösbar mit der ausgangsseitigen Antriebswelle direkt verbindet. Die Trennkupplung wird bei einer vorgegebenen Drehzahl des Antriebsmotors geschlossen, um den Antriebsmotor unter Umgehung des hydrostatischen Getriebes unmittelbar mit der ausgangsseitigen Antriebswelle zu verbinden. Beim Umschalten von dem Antrieb über das hydrostatische Getriebe auf einen Antrieb mittels der Direktdurchtriebswelle kann jedoch ein Schaltruck auftreten.

In der DE- 40 26 659 A1 wird für Kopplung eines mechanischen Vorlegegetriebes an eine Antriebsmaschine über eine Schaltkupplung vorgeschlagen, die Antriebsmaschine bei jedem Schaltvorgang so anzusteuern, daß die Drehzahl der Antriebsmaschine größer ist als die Drehzahl der eingangsseitigen Welle des Vorlegegetriebes. Dadurch wird sichergestellt, daß die Kupplung bei jedem Schaltvorgang auf Zug belastet wird.

Ausgehend von der DE 35 40 218 A1 liegt der vorliegenden Erfindung die Aufgabe zugrunde, einen hydrostatischen Antrieb mit Direktdurchtriebswelle so weiterzubilden, daß das Umschalten von einem Antrieb über das hydrostatische Getriebe auf einen Antrieb mittels der Direktdurchtriebswelle im wesentlichen ruckfrei erfolgt, sowie ein Verfahren zum Betreiben eines derartigen hydrostatischen Antriebs anzugeben.

Die Erfindung wird hinsichtlich des hydrostatischen Antriebs durch die Merkmale des Anspruches 1 gelöst.

Der Erfindung liegt die Erkenntnis zugrunde, daß eine Synchronisation der antriebsmotorseitigen Drehzahl an der Trennkupplung auf die antriebswellenseitige Drehzahl an der Trennkupplung in effizienter Weise über das mit dem Antriebsmotor in Verbindung stehende hydrostatische Getriebe erfolgen kann. Dabei wird der Antriebsmotor durch gezieltes Einwirken auf das hydrostatische Getriebe entweder belastet oder entlastet, um die synchronisierende Erhöhung bzw. Reduzierung der antriebsmotorseitigen Drehzahl zu erzielen. Diese Vorgehensweise ist besonders vorteilhaft, da sie neben den notwendigen Drehzahlsensoren keine weiteren konstruktiven Maßnahmen erfordert.

Die Ansprüche 2 bis 7 beinhalten vorteilhafte Weiterbildungen des erfindungsgemäßen hydrostatischen Antriebs.

Wenn der Hydromotor des hydrostatischen Getriebes verstellbar ist, kann nach Anspruch 2 die Synchronisation in der Weise erfolgen, daß der Hydromotor auf ein größeres Verdrängungsvolumen ausgeschwenkt wird, wenn zu Beginn der Synchronisation die antriebsmotorseitige Drehzahl an der Trennkupplung kleiner ist als die antriebswellenseitige Drehzahl. Andererseits wird der Hydromotor auf ein kleineres Verdrängungsvolumen zurückgeschwenkt, wenn zu Beginn der Synchronisation die antriebsmotorseitige Drehzahl größer ist als die antriebswellenseitige Drehzahl an der Trennkupplung.

Falls die Hydropumpe des hydrostatischen Getriebes verstellbar ist, wird gemäß Anspruch 3 in umgekehrter Weise vorgegangen. Wenn zu Beginn der Synchronisation die antriebsmotorseitige Drehzahl größer ist als die antriebswellenseitige Drehzahl an der Trennkupplung, wird die Hydropumpe auf ein größeres Verdrängungsvolumen weiter ausgeschwenkt, während die Hydropumpe auf ein kleineres Verdrängungsvolumen zurückgeschwenkt wird, wenn zu Beginn der Synchronisation die antriebsmotorseitige Drehzahl kleiner ist als die antriebswellenseitige Drehzahl an der Trennkupplung.

Als Sensor für die Drehzahl des Antriebsmotors kann entsprechend der Weiterbildung nach Anspruch 6 die an den Antriebsmotor gekoppelte Lichtmaschine verwendet werden, wobei die der Drehzahl des Antriebsmotors proportionale Frequenz der Ausgangsspannung der Lichtmaschine als Auswertesignal zur Verfügung steht.

Die Aufgabe wird hinsichtlich des Verfahrens zum Betreiben des hydrostatischen Antriebs durch die Merkmale des Anspruches 8 gelöst.

Das Umschalten zwischen einem Antrieb über das hydrostatische Getriebe auf einen Antrieb mittels der Direktdurchtriebswelle kann nach Anspruch 10 automatisch erfolgen. Dabei wird auf die Direktdurchtriebswelle umgeschaltet, wenn die Drehzahl des Antriebsmotors eine vorgegebene Drehzahl überschreitet. Umgekehrt wird nach Anspruch 11 die Trennkupplung wieder geöffnet, wenn die Drehzahl des Antriebsmotors eine vorgegebene Drehzahl unterschreitet.

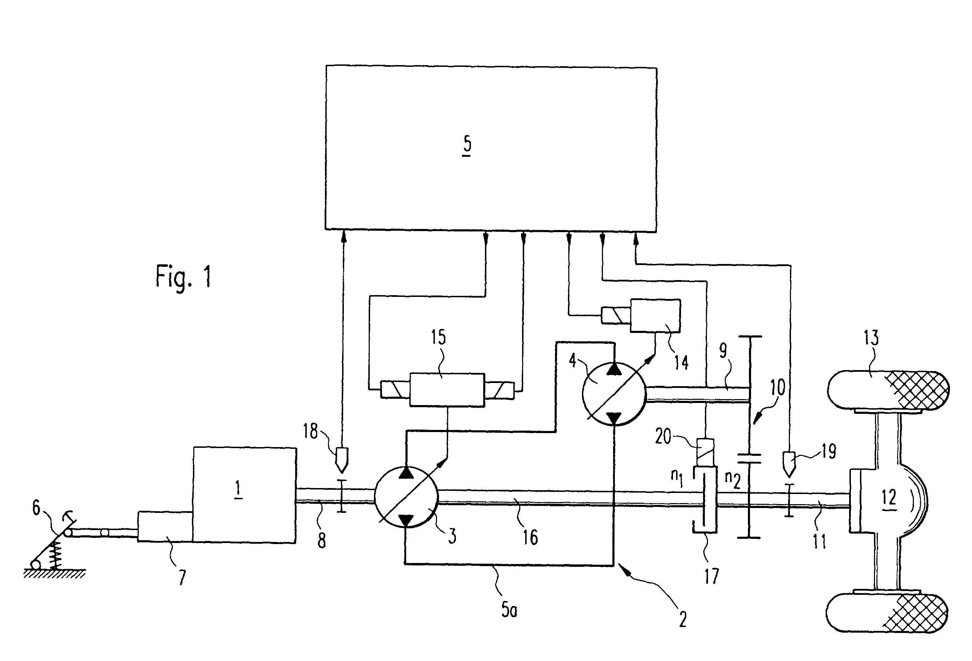

Nachstehend wird die Erfindung anhand eines bevorzugten Ausführungsbeispiels unter Bezugnahme auf die Zeichnung näher beschrieben; die einzige
- Figur 1: zeigt einen Schaltplan eines hydrostatischen Antriebs gemäß einem Ausführungsbeispiel der Erfindung.

Der hydrostatische Antrieb gemäß dem in Figur 1 dargestellten Ausführungsbeispiel ist als Fahrantrieb für Fahrzeuge vorgesehen und umfaßt u.a. einen Antriebsmotor 1 und ein allgemein mit dem Bezugszeichen 2 bezeichnetes hydrostatisches Getriebe, das eine Hydropumpe 3 und einen Hydromotor 4 umfaßt, die in einem hydraulischen Kreislauf 5 angeordnet sind. Die Leistung des Antriebsmotors 1 ist über ein Gaspedal 6, das auf eine Einspritzpumpe 7 oder eine Drosselklappe einwirkt, regelbar.

Die Hydropumpe 3 des hydrostatischen Getriebes 2 ist über eine Welle 8 mit dem Antriebsmotor 1 gekoppelt, während der Hydromotor 4 über eine Hydromotorwelle 9 und ein Getriebe 10 mit der ausgangsseitigen Antriebswelle 11 gekoppelt ist. Die Antriebswelle 11 treibt über ein Differential 12 die Fahrzeugräder 13.

Das Verdrängungsvolumen des Hydromotors 4 ist über ein erstes Stellglied 14 einer Verstellvorrichtung 14, 15 einstellbar, während das Verdrängungsvolumen der Hydropumpe 3 über ein zweites Stellglied 15 der Verstellvorrichtung 14, 15 variabel ist. Die Stellglieder 14 und 15 der Verstellvorrichtung 14, 15 werden von einer elektronischen Steuereinheit 5 angesteuert und können in bekannter Weise Elektromagnete aufweisen und verstellen die Neigung einer Schrägscheibe oder Taumelscheibe des Hydromotors 4 bzw. der Hydropumpe 3. Für die vorliegende Erfindung ist es jedoch ausreichend, wenn entweder nur der Hydromotor 4 oder nur die Hydropumpe 3 verstellbar sind.

Die Welle 8 des Antriebsmotors 1 ist als Direktdurchtriebswelle 16 verlängert und kann über eine Trennkupplung 17 mit der Antriebswelle 11 lösbar gekoppelt werden. Das Öffnen und Schließen der Trennkupplung 17 erfolgt mittels einer Betätigungsvorrichtung 20, die von der elektronischen Steuereinheit 5 ansteuerbar ist.

Die Direktdurchtriebswelle 16 dient in bekannter Weise der Überbrückung des hydrostatischen Getriebes 2 in einem Schnellfahrbetrieb oberhalb einer vorgegebenen Drehzahl des Antriebsmotors 1, um in diesem Schnellfahrbetrieb den Wirkungsgrad des gesamten Antriebs zu erhöhen.

Erfindungsgemäß sind desweiteren zwei Sensoren 18 und 19 vorgesehen, um die antriebsmotorseitige Drehzahl n₁ und die antriebswellenseitige Drehzahl n₂ an der Trennkupplung 17 zu erfassen. Der Sensor 18 kann an der mit der Durchtriebswelle 16 gekoppelten Welle 8 des Antriebsmotors 1 - wie in Figur 1 dargestellt - angeordnet sein. Der Sensor 19 kann, wie im in Figur 1 dargestellten Ausführungsbeispiel, unmittelbar an der ausgangsseitigen Antriebswelle 11 oder an jeder anderen geeigneten Stelle im Antriebsstrang zwischen dem Hydromotor 4 und der Antriebswelle 11 angeordnet sein. Wenn der Sensor 19 an der Hydromotorwelle 9 vorgesehen ist, so muß lediglich in der elektronischen Steuereinheit 5 die Drehzahl der Hydromotorwelle 9 über das Übersetzungsverhältnis des Getriebes 10 in die Drehzahl der Antriebswelle 11 umgerechnet werden. Als Sensor 18 kann eine in der Regel ohnehin vorhandene, an den Antriebsmotor 1 gekoppelte Lichtmaschine dienen, wobei die Frequenz der Ausgangsspannung der Lichtmaschine der Drehzahl des Antriebsmotors proportional ist und somit als Maß für die Drehzahl des Antriebsmotors Verwendung finden kann.

Nachfolgend wird die Funktion des erfindungsgemäßen Antriebs beschrieben.

Im Anfahrbetrieb und Langsamfahrbetrieb erfolgt der Antrieb des Fahrzeugs in bekannter Weise über das hydrostatische Getriebe 2, die Hydromotorwelle 9, das Getriebe 10 und die Antriebswelle 11. Die Drehzahl des Antriebsmotors 1 wird über den Sensor 18 von der elektronischen Steuereinheit 5 fortwährend erfaßt. Beim Überschreiten einer vorgegebenen Drehzahl des Antriebsmotors 1 wird ein Umschaltpunkt erreicht, bei dem von dem Antrieb über das hydrostatische Getriebe 2 auf einen Antrieb über die Direktdurchtriebswelle 16 umgeschaltet wird. Vor dem Schließen der Trennkupplung 17 erfolgt erfindungsgemäß jedoch eine Synchronisation der antriebsmotorseitigen Drehzahl n₁ auf die antriebswellenseitige Drehzahl n₂ an der Trennkupplung 17. Dazu wird zunächst eine gegebenenfalls vorhandene, in Figur 1 nicht eingezeichnete Leistungsregelung des Antriebs außer Funktion gesetzt. Sodann werden mittels der Sensoren 18 und 19 die Drehzahlen der Direktdurchtriebswelle 16 und der ausgangsseitigen Antriebswelle 11 erfaßt und in der elektronischen Steuereinheit 5 verglichen.

Ergibt der Vergleich, daß die antriebsmotorseitige Drehzahl n₁ an der Trennkupplung 17 kleiner ist als die antriebswellenseitige Drehzahl n₂ , so wird der Antriebsmotor 1 durch Einwirken auf das hydrostatische Getriebe 2 gezielt entlastet, um die antriebsmotorseitige Drehzahl n₁ zu erhöhen. Dazu wird entweder der Hydromotor 4 auf ein größeres Verdrängungsvolumen ausgeschwenkt oder die Hydropumpe 3 wird auf geringeres Verdrängungsvolumen zurückgeschwenkt. Dadurch fällt der Arbeitsdruck und/oder das Fördervolumen in der Hochdruckleitung des hydraulischen Kreislaufes 5. Durch die eintretende Entlastung des Antriebsmotors 1 steigt entsprechend die Drehzahl der Direktdurchtriebswelle 16, d.h. die antriebsmotorseitige Drehzahl n₁ an der Trennkupplung 17. Die antriebsmotorseitige Drehzahl n₁ und die antriebswellenseitige Drehzahl n₂ werden von der elektronischen Steuereinheit 5 mittels der Sensoren 18 und 19 fortwährend erfaßt. Wenn diese Drehzahlen im wesentlichen übereinstimmen, ist der Synchronisationsvorgang beendet und die Trennkupplung 17 kann mittels der Betätigungsvorrichtung 20 geschlossen werden. Vor oder während dem Schließen der Trennkupplung 17 kann zumindest die Hydropumpe 3, vorzugsweise aber auch der Hydromotor 4 mittels der Stellglieder 15 und 14 in eine Neutralstellung ohne Verdrängungsvolumen gebracht werden, um das hydrostatische Getriebe 2 abzuschalten.

Wenn beim Erreichen des Umschaltpunktes die antriebsmotorseitige Drehzahl n₁ an der Trennkupplung 17 größer ist als die antriebswellenseitige Drehzahl n₂, so wird der Antriebsmotor 1 über das hydrostatische Getriebe 2 entsprechend belastet, um die antriebsmotorseitige Drehzahl n₁ zu reduzieren. Dabei wird entweder der Hydromotor 4 mittels der Stelleinheit 14 auf ein geringes Verdrängungsvolumen zurückgeschwenkt oder die Hydropumpe 3 wird mittels der Verstelleinheit 15 auf ein größeres Verdrängungsvolumen ausgeschwenkt, wobei der Druck und/oder das Fördervolumen in der Hochdruckleitung des hydraulischen Kreislaufes 5 entsprechend erhöht wird. Durch die eintretende erhöhte Belastung des Antriebsmotors 1 wird dessen Drehzahl und somit auch die antriebsmotorseitige Drehzahl n₁ an der Trennkupplung 17 reduziert. Wenn die antriebsmotorseitige Drehzahl n₁ im wesentlichen mit der antriebswellenseitigen Drehzahl n₂ übereinstimmt, so wird der Synchronisationsvorgang beendet, indem die Trennkupplung 17 mittels der Betätigungsvorrichtung 20 geschlossen wird. Vorher oder gleichzeitig können die Hydropumpe 3 und der Hydromotor 4 in eine Neutralstellung ohne Verdrängungsvolumen geschwenkt werden, um das hydrostatische Getriebe 2 abzuschalten.

Die beschriebenen Maßnahmen zum Be- bzw. Entlasten des Antriebsmotors 1 an dem Hydromotor 4 und der Hydropumpe 3 können selbstverständlich auch gleichzeitig vorgenommen werden, um eine besonders schnell wirkende Synchronisation zu erreichen. Dabei ist, wie vorstehend beschrieben, die Verschwenkung der Hydropumpe 3 jeweils gegenläufig zur Verschwenkung des Hydromotors 4.

Durch die erfindungsgemäße Synchronisation kann das Umschalten von einem Antrieb über das hydrostatische Getriebe 2 auf einen Antrieb mittels der Direktdurchtriebswelle 16 besonders ruckfrei erfolgen.

Die Erfindung ist nicht auf das vorbeschriebene Ausführungsbeispiel beschränkt. Anstelle einer elektromechanischen Einwirkung der elektronischen Steuereinheit 5 auf die Stellglieder 14 und 15 und die Betätigungsvorrichtung 20 ist z.B. auch eine hydraulische oder pneumatische Einwirkung möglich. Ferner kann eine Hydropumpe 3 oder ein Hydromotor 4 mit festem, nicht regelbarem Verdrängungsvolumen Verwendung finden.

## Patentansprüche

1. Hydrostatischer Antrieb, insbesondere für Fahrzeuge, mit einem Antriebsmotor (1),
einem hydrostatischen Getriebe (2), das zumindest eine in einem hydraulischen Kreislauf (5) angeordnete Hydropumpe (3) und einen Hydromotor (4) sowie eine auf das Verdrängungsvolumen des Hydromotors (4) und/oder der Hydropumpe (3) einwirkende Verstellvorrichtung (14, 15) aufweist, wobei die Hydropumpe (3) an den Antriebsmotor (1) und der Hydromotor (4) an eine ausgangsseitige Antriebswelle (11) gekoppelt ist, und
einer Direktdurchtriebswelle (16), die den Antriebsmotor (1) über eine Trennkupplung (17) lösbar mit der ausgangsseitigen Antriebswelle (11) direkt verbindet,
**gekennzeichnet durch**
einen ersten Sensor (18) zum Erfassen der antriebsmotorseitigen Drehzahl (n₁) an der Trennkupplung (17),
einen zweiten Sensor (19) zum Erfassen der antriebswellenseitigen Drehzahl (n₂) an der Trennkupplung (17) und
eine mit den Sensoren (18, 19), der Verstellvorrichtung (14, 15) und über eine Betätigungsvorrichtung (20) mit der Trennkupplung (17) verbundene Steuereinheit (5), die vor jedem Schließen der Trennkupplung (17) durch Verstellen der Verstellvorrichtung (14, 15) des hydrostatischen Getriebes (2) so auf die Drehzahl des Antriebsmotors (1) einwirkt, daß die antriebsmotorseitige Drehzahl (n₁) mit der antriebswellenseitigen Drehzahl (n₂) an der Trennkupplung (17) im wesentlichen übereinstimmt.

2. Hydrostatischer Antrieb nach Anspruch 1,
**dadurch gekennzeichnet,**
daß das Verdrängungsvolumen des Hydromotors (4) über die Verstellvorrichtung (14) verstellbar ist und die Steuereinheit (5) zum Angleichen der antriebsmotorseitigen Drehzahl (n₁) an die antriebswellenseitige Drehzahl (n₂) an der Trennkupplung (17) den Hydromotor (4) auf ein größeres Verdrängungsvolumen weiter ausschwenkt, wenn anfänglich die antriebsmotorseitige Drehzahl (n₁) kleiner als die antriebswellenseitige Drehzahl (n₂) ist,
bzw. den Hydromotor (4) auf ein kleineres Verdrängungsvolumen zurückschwenkt, wenn anfänglich die antriebsmotorseitige Drehzahl (n₁) größer als die antriebswellenseitige Drehzahl (n₂) ist.

3. Hydrostatischer Antrieb nach Anspruch 1 oder 2,
**dadurch gekennzeichnet,**
daß das Verdrängungsvolumen der Hydropumpe (3) über die Verstellvorrichtung (15) verstellbar ist und die Steuereinheit (5) zum Angleichen der antriebsmotorseitigen Drehzahl (n₁) an die antriebswellenseitige Drehzahl (n₂) an der Trennkupplung (17) die Hydropumpe (3) auf ein größeres Verdrängungsvolumen weiter ausschwenkt, wenn anfänglich die antriebsmotorseitige Drehzahl (n₁) größer als die antriebswellenseitige Drehzahl (n₂) ist,
bzw. die Hydropumpe (3) auf ein kleineres Verdrängungsvolumen zurückschwenkt, wenn anfänglich die antriebsmotorseitige Drehzahl (n₁) kleiner als die antriebswellenseitige Drehzahl (n₂) ist.

4. Hydrostatischer Antrieb nach einem der Ansprüche 1 bis 3,
**dadurch gekennzeichnet,**
daß der erste Sensor (18) an der Welle (8) des Antriebsmotors (1) angeordnet ist.

5. Hydrostatischer Antrieb nach einem der Ansprüche 1 bis 4,
**dadurch gekennzeichnet,**
daß der zweite Sensor (19) an der ausgangsseitigen Antriebswelle (11) angeordnet ist.

6. Hydrostatischer Antrieb nach einem der Ansprüche 1 bis 5,
**dadurch gekennzeichnet,**
daß der erste Sensor (18) durch eine an den Antriebsmotor (1) gekoppelte Lichtmaschine gebildet ist, wobei die der Drehzahl des Antriebsmotors (1) proportionale Frequenz der Ausgangsspannung der Lichtmaschine erfaßt wird.

7. Hydrostatischer Antrieb nach einem der Ansprüche 1 bis 6,
**dadurch gekennzeichnet,**
daß der Hydromotor (4) über ein Getriebe (10) mit der ausgangsseitigen Antriebswelle (11) gekoppelt ist.

8. Verfahren zum Betreiben eines hydrostatischen Antriebs nach dem Oberbegriff des Anspruches 1,
mit den Verfahrensschritten:
- Erfassen der antriebsmotorseitigen Drehzahl (n₁) und der antriebswellenseitigen Drehzahl (n₂) an der Trennkupplung (17),
- Vergleichen der erfaßten Drehzahlen (n₁, n₂),
- Ausschwenken des Hydromotors (4) auf ein größeres Verdrängungsvolumen und/oder Zurückschwenken der Hydropumpe (3) auf ein kleineres Verdrängungsvolumen, wenn die erfaßte antriebsmotorseitige Drehzahl (n₁) kleiner als die erfaßte antriebswellenseitige Drehzahl (n₂) ist,
oder
Zurückschwenken des Hydromotors (4) auf ein kleineres Verdrängungsvolumen und/oder Ausschwenken der Hydropumpe (3) auf ein größeres Verdrängungsvolumen, wenn die erfaßte antriebsmotorseitige Drehzahl (n₁) größer als die erfaßte antriebswellenseitige Drehzahl (n₂) ist,
zum Angleichen der antriebsmotorseitigen Drehzahl (n₁) an die antriebswellenseitige Drehzahl (n₂) an der Trennkupplung (17),
Schließen der Trennkupplung (17), wenn die antriebsmotorseitige Drehzahl (n₁) mit der antriebswellenseitigen Drehzahl (n₂) an der Trennkupplung im wesentlichen übereinstimmt.

9. Verfahren nach Anspruch 8,
**dadurch gekennzeichnet,**
daß nach dem Angleichen der antriebsmotorseitigen (n₁) und antriebswellenseitigen (n₂) Drehzahl an der Trennkupplung (17) der Hydromotor (4) und/oder die Hydropumpe (3) in eine Neutralstellung ohne Verdrängungsvolumen zurückgeschwenkt werden und in dieser Neutralstellung verbleiben, solange die Trennkupplung geschlossen ist.

10. Verfahren nach Anspruch 8 oder 9,
**dadurch gekennzeichnet,**
daß das Angleichen der antriebsmotorseitigen (n₁) und antriebswellenseitigen (n₂) Drehzahl an der Trennkupplung (17) und das Schließen der Trennkupplung bei einem ersten Umschaltpunkt erfolgt, der dem Überschreiten einer vorgegebenen Drehzahl des Antriebsmotors (1) entspricht.

11. Verfahren nach einem der Ansprüche 8 bis 10,
**dadurch gekennzeichnet,**
daß die Trennkupplung (17) bei einem zweiten Umschaltpunkt geöffnet wird, der dem Unterschreiten einer vorgegebenen Drehzahl des Antriebsmotors (1) entspricht.

## Claims

1. Hydrostatic drive, in particular for vehicles, having a drive motor (1),
a hydrostatic transmission (2), which includes at least a hydraulic pump (3) and a hydraulic motor (4) arranged in a hydraulic circuit (5) and an adjustment device (14, 15) acting upon the displacement volume of the hydraulic motor (4) and/or of the hydraulic pump (3), whereby the hydraulic pump (3) is coupled to the drive motor (1) and the hydraulic motor (4) is coupled to an output drive shaft (11), and
a direct through-drive shaft (16) which directly connects the drive motor (1) with the output drive shaft (11) releasably via a separating clutch (17),
characterised by
a first sensor (18) for detecting the drive motor side speed of rotation (n₁) at the separating clutch (17), a second sensor (19) for detecting the drive shaft side speed of rotation (n₂) at the separating clutch (17), and
a control unit (5) connected with the sensors (18, 19), the adjustment device (14, 15) and - via an actuating device (20) - with the separating clutch (17), which control unit before each closing of the separating clutch (17) so acts upon speed of rotation of the drive motor (1) - through adjustment of adjustment device (14, 15) of the hydrostatic transmission (2) - that the drive motor side speed of rotation (n₁) substantially coincides with the drive shaft side speed of rotation (n₂) at the separating clutch (17).

2. Hydrostatic drive according to claim 1,
characterised in that,
the displacement volume of the hydraulic motor (4) is adjustable via the adjustment device (14) and, for equalization of the drive motor side speed of rotation (n₁) with the drive shaft side speed of rotation (n₂) at the separating clutch (17), the control unit (5) further swings out the hydraulic motor (2) to a larger displacement volume, if initially the drive motor side speed of rotation (n₁) is smaller than the drive shaft side speed of rotation (n₂),
or swings the hydraulic motor (4) back to a smaller displacement volume, if initially the drive motor side speed of rotation (n₁) is larger than the drive shaft side speed of rotation (n₂).

3. Hydrostatic drive according to claim 1 or 2,
characterised in that,
the displacement volume of the hydraulic pump (3) is adjustable via the adjustment device (15) and, for equalization of the drive motor side speed of rotation (n₁) with the drive shaft side speed of rotation (n₂) at the separating clutch (17), the control unit (5) further swings out the hydraulic pump (3) to a larger displacement volume, if initially the drive motor side speed of rotation (n₁) is larger than the drive shaft side speed of rotation (n₂),
or swings the hydraulic pump (3) back to a smaller displacement volume, if initially the drive motor side speed of rotation (n₁) is smaller than the drive shaft side speed of rotation (n₂).

4. Hydrostatic transmission according to any of claims 1 to 3,
characterized in that,
the first sensor (18) is arranged at the shaft (8) of the drive motor (1).

5. Hydraulic drive according to any of claims 1 to 4,
characterized in that,
the second sensor (19) is arranged at the output drive shaft (11).

6. Hydrostatic transmission according to any of claims 1 to 5,
characterized in that,
the first sensor (18) is formed by a generator coupled to the drive motor (1), whereby the frequency of the output voltage of the generator - which is proportional to the speed of rotation of the drive motor (1) - is detected.

7. Hydrostatic transmission according to any of claims 1 to 6,
characterized in that,
the hydraulic motor (4) is connected with the output drive shaft (11) via a transmission (10).

8. Method of operating a hydrostatic drive according to the preamble of claim 1,
having the following method steps:
- detecting the drive motor side speed of rotation (n₁) and the drive shaft side speed of rotation (n₂) at the separating clutch (17)
- comparing the detected speeds of rotation (n₁, n₂),
- swinging out the hydraulic motor (4) to a larger displacement volume and/or swinging back the hydraulic pump (3) to a smaller displacement volume if the detected drive motor side speed of rotation (n₁) is smaller than the detected drive shaft side speed of rotation (n₂),
or
swinging back the hydraulic motor (4) to a smaller displacement volume and/or swinging out the hydraulic pump (3) to a larger displacement volume if the detected drive motor side speed of rotation (n₁) is larger than the detected drive shaft side speed of rotation (n₂),
for equalization of the drive motor side speed of rotation (n₁) with the drive shaft side speed of rotation (n₂) at the separating clutch (17),
closing the separating clutch (17) when the drive motor side speed of rotation (n₁) substantially coincides with the drive shaft side speed of rotation (n₂) at the separating clutch.

9. Method according to claim 8,
characterized in that,
after the equalization of the drive motor side (n₁) and the drive shaft side (n₂) speed of rotation at the separating clutch (17), the hydraulic motor (4) and/or the hydraulic pump (3) are swung back into a neutral disposition without displacement volume and remain in this neutral disposition for so long as the separating clutch is closed.

10. Method according to claim 8 or 9,
characterized in that,
the equalization of the drive motor side (n₁) and drive shaft side (n₂) speed of rotation at the separating clutch (17) and the closing of the separating clutch are effected at a first change-over point which corresponds to a predetermined speed of rotation of the drive motor (1) being exceeded.

11. Method according to any of claims 8 to 10,
characterized in that,
at a second change-over point, which corresponds to a predetermined speed of rotation of the drive motor (1) being under-shot, the separating clutch (17) is opened.

## Revendications

1. Entraînement hydrostatique, en particulier pour véhicules, comportant
un moteur d'entraînement (1),
une transmission hydrostatique (2), qui comporte au moins une pompe hydraulique (3), disposée dans un circuit hydraulique (5), et un moteur hydraulique (4) ainsi qu'un dispositif de réglage (14, 15) agissant sur le volume de déplacement du moteur hydraulique (4) et/ou de la pompe hydraulique (3), la pompe hydraulique (3) étant couplée au moteur d'entraînement (1) et le moteur hydraulique (4) à un arbre moteur (11) côté sortie et
un arbre de prise directe (16), qui relie directement le moteur d'entraînement (1), par l'intermédiaire d'un accouplement de séparation (17), de manière amovible, avec l'arbre moteur (11) côté sortie,
caractérisé par
un premier capteur (18) destiné à détecter la vitesse de rotation (n₁) côté moteur d'entraînement sur l'accouplement de séparation (17),
un deuxième capteur (9) destiné à détecter la vitesse de rotation (n₂) côté arbre moteur sur l'accouplement de séparation (17) et
une unité de commande (5), reliée aux capteurs (18, 19), au dispositif de réglage (14, 15) et, par l'intermédiaire d'un dispositif d'actionnement (20), à l'accouplement de séparation (17), laquelle unité de commande agit, avant chaque fermeture de l'accouplement de séparation (17) par réglage du dispositif de réglage (14, 15) de la transmission hydrostatique (2), sur la vitesse de rotation du moteur d'entraînement (1), de manière que la vitesse de rotation (n₁) côté moteur d'entraînement coïncide sensiblement avec la vitesse de rotation (n₂) côté arbre moteur, sur l'accouplement de séparation (17).

2. Entraînement hydrostatique selon la revendication 1, caractérisé
en ce que le volume de déplacement du moteur hydraulique (4) est réglable par l'intermédiaire du dispositif de réglage (14) et l'unité de commande (5), pour adapter la vitesse de rotation (n₁) côté moteur d'entraînement à la vitesse de rotation (n₂) côté arbre moteur, sur l'accouplement de séparation (17), continue de faire basculer le moteur hydraulique (4) sur un volume de déplacement supérieur, si initialement la vitesse de rotation (n₁) côté moteur d'entraînement est inférieure à la vitesse de rotation (n₂) côté arbre moteur,
ou fait rebasculer le moteur hydraulique (4) sur un plus petit volume de déplacement, si initialement la vitesse de rotation (n₁) côté moteur d'entraînement est supérieure à la vitesse de rotation (n₂) côté arbre moteur.

3. Entraînement hydrostatique selon la revendication 1 ou 2, caractérisé
en ce que le volume de déplacement de la pompe hydraulique (3) est réglable par l'intermédiaire du dispositif de réglage (15) et l'unité de commande (5) pour adapter la vitesse de rotation (n₁) côté moteur d'entraînement à la vitesse de rotation (n₂) côté arbre moteur, sur l'accouplement de séparation (17), continue de faire basculer la pompe hydraulique (3) sur un volume de déplacement supérieur, si initialement la vitesse de rotation (n₁) côté moteur d'entraînement est supérieure à la vitesse de rotation (n₂) côté arbre moteur,
ou fait rebasculer la pompe hydraulique (3) sur un plus petit volume de déplacement, si initialement la vitesse de rotation (n₁) côté moteur d'entraînement est inférieure à la vitesse de rotation (n₂) côté arbre moteur.

4. Entraînement hydrostatique selon l'une des revendications 1 à 3,
caractérisé
en ce que le premier capteur (18) est disposé sur l'arbre (8) du moteur d'entraînement (1).

5. Entraînement hydrostatique selon l'une des revendications 1 à 3,
caractérisé
en ce que le deuxième capteur (19) est disposé sur l'arbre moteur (11) côté sortie.

6. Entraînement hydrostatique selon l'une des revendications 1 à 5,
caractérisé
en ce que le premier capteur (18) est constitué par une dynamo d'éclairage couplée au moteur d'entraînement (1), la fréquence de la tension de sortie de la dynamo d'éclairage, proportionnelle à la vitesse de rotation du moteur d'entraînement (1) étant détectée.

7. Entraînement hydrostatique selon l'une des revendications 1 à 6,
caractérisé
en ce que le moteur hydraulique (4) est couplé à l'arbre moteur (11) côté sortie par l'intermédiaire d'une transmission (10).

8. Procédé destiné à faire fonctionner un entraînement hydrostatique selon le préambule de la revendication 1, comportant les étapes suivantes :
- détection de la vitesse de rotation (n₁) côté moteur d'entraînement et de la vitesse de rotation (n₂) côté arbre moteur sur l'accouplement de séparation (17),
- comparaison des vitesses de rotation (n₁, n₂) détectées,
- basculement du moteur hydraulique (4) sur un plus grand volume de déplacement et/ou rebasculement de la pompe hydraulique (3) sur un plus petit volume de déplacement, si la vitesse de rotation (n₁) côté moteur d'entraînement est inférieure à la vitesse de rotation (n₂) côté arbre moteur,
ou
rebasculement du moteur hydraulique (4) sur un plus petit volume de déplacement et/ou basculement de la pompe hydraulique (3) sur un plus grand volume de déplacement, si la vitesse de rotation (n₁) côté moteur d'entraînement est supérieure à la vitesse de rotation (n₂) côté arbre moteur détectée,
pour l'adaptation de la vitesse de rotation (n₁) côté moteur d'entraînement à la vitesse de rotation (n₂) côté arbre moteur, sur l'accouplement de séparation (17),
fermeture de l'accouplement de séparation (17), si la vitesse de rotation (n₁) côté moteur d'entraînement coïncide sensiblement avec la vitesse de rotation (n₂) côté arbre moteur, sur l'accouplement de séparation.

9. Procédé selon la revendication 8, caractérisé en ce qu'après adaptation de la vitesse de rotation (n₁) côté moteur d'entraînement et de la vitesse de rotation (n₂) côté arbre moteur, sur l'accouplement de séparation (17), le moteur hydraulique (4) et/ou la pompe hydraulique (3) sont rebasculés dans une position neutre sans volume de déplacement et restent dans cette position, aussi longtemps que l'accouplement de séparation est fermé.

10. Procédé selon la revendication 8 ou 9, caractérisé en ce que l'adaptation de la vitesse de rotation (n₁) côté moteur d'entraînement et de la vitesse de rotation (n₂) côté arbre moteur, sur l'accouplement de séparation (17) et la fermeture de l'accouplement de séparation s'effectuent pour un premier point de commutation, qui correspond au dépassement d'une valeur de rotation donnée du moteur d'entraînement (1).

11. Procédé selon l'une des revendications 8 à 10, caractérisé en ce que l'accouplement de séparation (17) est ouvert pour un deuxième point de commutation, qui correspond au passage au-dessous d'une vitesse de rotation donnée du moteur d'entraînement (1).
